# EUROPEAN PATENT APPLICATION

(11) **EP 3 949 805 A1**
(43) Date of publication of application: **09.02.2022**
(21) Application number: 20783404.5
(22) Date of filing: 30.03.2020
(51) Int. Cl.: A47C 1/025, B60N 2/235

(54) **RECLINING DEVICE AND SEAT**

(30) Priority: 02.04.2019 JP 2019070768
(71) Applicant: Delta Kogyo Co., Ltd., Aki-gun, Hiroshima 735-8501 (JP)
(72) Inventor: FUJITA, Etsunori, Aki-gun, Hiroshima 735-8501 (JP); YAMASHITA, Mitsuhiro, Aki-gun, Hiroshima 735-8501 (JP); ENOMOTO, Teruaki, Aki-gun, Hiroshima 735-8501 (JP)
(74) Representative: Hoffmann Eitle
(86) International application number: PCT/JP2020/014498
(87) International publication number: WO 2020/203955

(57) **Abstract**

In the present invention, a gap 73 is formed between an axial-direction outer end portion of an internal gear 30 and an attachment ring 70, and the gap 73 is filled with a lubricant 74. This configuration makes the rotation of the internal gear 30 relative to the attachment ring 70 smoother and also can reduce the generation of abnormal sound. Further, the thickness of second lock plates 60B, 60D between which and an inner surface of a guide bracket 20 rolling balls 65 are not interposed is equal to or more than the distance between the inner surface of the guide bracket 20 and outer surfaces of first lock plates 60A, 60C, between which the rolling balls 65 are interposed, and preferably substantially equal to the distance. This reduces the precession of the first lock plates 60A, 60C and makes it possible for a load input in an axial direction to be mainly received by the second lock plates 60B, 60D.

## Description

### Technical Field

The present invention relates to a reclining device attached to a seat of a vehicle or the like to adjust an angle of inclination of a seat back relative to a seat cushion, and a seat in which the reclining device is assembled.

### Background Art

Patent Documents 1 to 3 disclose a reclining device which has a guide bracket fixed to one of a seat cushion and a seat back, an internal gear fixed to the other, and lock plates disposed between the guide bracket and the internal gear and having external teeth engageable with internal teeth of the internal gear, and which keeps the seat back at an appropriate angle of inclination by the engagement of the internal teeth and the external teeth and allows the seat back to rotate forward and rearward by releasing their engagement. On an outer circumferential surface of the guide bracket or the internal gear, an attachment ring is fixed. The attachment ring is ring-shaped and has a ring-shaped bottom plate and a ring-shaped side surface and thus has a substantially L-shaped section. The attachment ring is inserted from one of the guide bracket and the internal gear, its ring-shaped side surface is fixed to the outer circumferential surface of the guide bracket or the internal gear located on an insertion-direction far side by welding or the like, and the internal gear or the guide bracket located therebetween is rotatably supported between the guide bracket or the internal gear and the ring-shaped bottom plate.

### Prior Art Document

### Patent Document

Patent Document 1: Japanese Patent Application Laid-open No. 2009-247392
Patent Document 2: Japanese Patent Application Laid-open No. 2005-230300
Patent Document 3: WO2017/043665

### Disclosure of the Invention

### Problems to Be Solved by the Invention

In Patent Document 1, a cam biased by a spiral spring is disposed at the center portion, the plurality of lock plates are disposed between adjacent guide walls provided on the guide bracket, the lock plates are slid radially outward by the rotation of the cam caused by the elasticity of the spiral spring, thereby engaging the external teeth of the lock plates with the internal teeth of the internal gear. To smooth the radial-direction sliding of the lock plates, small operation clearances are provided between the guide walls and the lock plates, but at the time of locking, the lock plates may move in the circumferential direction by an amount corresponding to the operation clearance to wobble or to come into contact with side surfaces of the guide walls, thereby generating abnormal sound.

In Patent Document 2, one of guide walls of the guide bracket is swingable, between this movable guide wall and a fixed guide wall provided at a predetermined interval, a plate-shaped wedge movable in the radial direction similarly to the lock plates is provided, thereby achieving a reduction in an operation clearance at the time of locking. However, the needs for swingably providing one of the guide walls and providing the plate-shaped wedge worked into a predetermined shape between the swingable movable guide wall and the fixed guide wall complicate the structure, leading to an increased manufacturing cost. Further, though it is possible to eliminate the circumferential-direction wobbling between the lock plates and the guide walls, it is not possible to eliminate a stacking-direction (axial-direction) operation clearance between the stacked members such as the lock plates and the guide bracket or the internal gear. In particular, at the time of unlocking, the circumferential-direction wedge function does not act, which tends to increase wobbling in the stacking direction.

In Patent Document 3, which aims to solve the aforesaid defects of Patent Documents 1 and 2, outer rolling members are disposed between the attachment ring and the outer surface of the internal gear, and inner rolling members rollable in the radial direction together with the lock plates are disposed between the inner surface of the guide bracket and surfaces, of the lock plates, facing the inner surface. Owing to the outer rolling members and the inner rolling members, force relatively pressing the stacked members in the stacking direction acts, and the spring force of the attachment ring acts as reactive force, thereby reducing the wobbling. Since the relative pressing force by the outer rolling members and the inner rolling members acts not only at the time of locking but also at the time of unlocking, the wobbling between the members is reduced in both of the times. In particular, the force acting to reduce the wobbling in the stacking direction is large and thus restricts the circumferential-direction movement to also reduce the wobbling in the circumferential direction at the time of locking. On the other hand, at the time of reclining which is the time of unlocking, the rotation of the outer rolling members acts to reduce frictional force between one of the guide bracket and the internal gear which rotates with the attachment ring and the other which rotates relative to the aforesaid one. Therefore, even though the operation clearance in the stacking direction is smaller than conventionally, the rolling of the outer rolling members reduces the frictional force, leading to the smooth relative rotation of the guide bracket and the internal gear.

In the structure of Patent Document 3, the outer rolling members disposed between the attachment ring and the internal gear ensures that they rotate smoothly, but in some case, depending on the degree of size variation between the members, the smooth rotation is inhibited and abnormal sound is generated in some case. Further, since the lock plates are disposed on the inner surface of the guide bracket with the inner rolling members therebetween, depending on the degree of size variation between the members, the lock plates may undergo slight precession about the inner rolling members to wobble.

Further, the aforesaid inner rolling members of Patent Document 3 are not provided for all the lock plates adjacent in the circumferential direction but provided for every two lock plates out of the lock plates adjacent in the circumferential direction, in consideration of structure complication, cost increase, and so on. This causes load concentration on the lock plates between which and the inner surface of the guide bracket the inner rolling members are interposed, so that indentations may be formed on the inner surface of the guide bracket by the inner rolling members. As a measure against the indentations, heat treatment for increasing the hardness of the inner surface of the guide bracket is necessary, which is a factor to complicate the manufacturing process and increase the manufacturing cost. Further, the load concentration on the lock plates between which and the guide grooves the inner rolling members are interposed increases frictional resistance, which may cancel the original function of the inner rolling members.

The present invention was made in consideration of the above and has an object to provide a reclining device that achieves the smoother rotation of an internal gear relative to an attachment ring, and that has a less load concentration on rolling balls being inner rolling members disposed between lock plates and a guide bracket, thereby making it possible to eliminate a need for a heat treatment process for increasing the hardness of the guide bracket and to provide a seat in which the reclining device is assembled.

### Means for Solving the Problems

To solve the above problem, a reclining device of the present invention includes:
a guide bracket connected to one of a seat cushion and a seat back;
an internal gear which is connected to the other of the seat cushion and the seat back and which rotates relative to the guide bracket;
a lock mechanism unit including a lock plate which is movable in a radial direction along a plurality of guide walls provided on an inner surface of the guide bracket and which has external teeth engageable with internal teeth of the internal gear; and
an attachment ring which has a ring-shaped bottom plate and a ring-shaped side plate extending from the ring-shaped bottom plate in a substantially orthogonal direction and has a substantially L-shape section, the ring-shaped bottom plate having an inner surface facing an axial-direction outer end portion of one of the internal gear and the guide bracket, and the ring-shaped side plate being fixed to an outer circumferential surface of the other of the internal gear and the guide bracket,
wherein the ring-shaped bottom plate of the attachment ring has such a shape that an inner circumferential edge thereof comes close to the axial-direction outer end portion of the facing internal gear or guide bracket, and
wherein a sliding member is provided in a gap formed by the attachment ring and the axial-direction outer end portion.

Preferably, a lubricant is used as the sliding member.

It is also preferable to use a highly slidable molded member as the sliding member.

In either case, preferably, the inner circumferential edge of the ring-shaped bottom plate of the attachment ring is in contact with the axial-direction outer end portion of the internal gear.

Preferably, an end surface of the inner circumferential edge of the ring-shaped bottom plate of the attachment ring is worked into a shape that comes into surface contact with a corresponding portion of the axial-direction outer end portion of the internal gear.

Preferably, a ball member is disposed in the gap together with the lubricant.

The ball member can be disposed in the gap without being fixed.

The ball member can be disposed rotatably at a predetermined position of the gap.

Preferably, a circumferential rim of the axial-direction outer end portion of the internal gear or the guide bracket forming the gap with the ring-shaped bottom plate of the attachment ring has an inclined surface, the ball member comes into contact with the inclined surface to bias the inclined surface in the axial center direction to be capable of aligning the internal gear or the guide bracket.

Preferably, the attachment ring is smaller in Vickers hardness than the internal gear.

Preferably, a difference in the Vickers hardness between the attachment ring and the internal gear is 100 HV or more.

Preferably, the lubricant is grease.

Preferably, the highly slidable molded member is molded from a thermoplastic resin to which a potassium titanate fiber is added.

Preferably, as the lock plate included in the lock mechanism unit, the following two kinds are used:
a first lock plate between which and the inner surface of the guide bracket a rolling ball is interposed; and
a second lock plate larger in thickness than the first lock plate and provided between the guide walls which are adjacent in a circumferential direction and between which the first lock plate is not disposed.

A seat of the present invention is a seat including a seat cushion and a seat back, the seat including the above-described reclining device.

### Effect of the Invention

According to the present invention, the gap is formed between the axial-direction outer end portion of the internal gear or the guide bracket and the attachment ring, and the sliding member is disposed in the gap. This makes the rotation of the internal gear or the guide bracket relative to the attachment ring smoother and also can reduce the generation of abnormal sound. Further, the thickness of the second lock plate between which and the inner surface of the guide bracket the rolling ball is not interposed is equal to or more than the distance between the inner surface of the guide bracket and the outer surface of the first lock plate between which the rolling ball is interposed, more preferably, substantially equal to the distance. This reduces the precession of the first lock plate and makes it possible for a load input along the axial direction to be received mainly by the second lock plate. This makes the radial-direction movement of the first lock plate smoother and makes the generation of the abnormal sound more difficult to occur. Further, since the load is dispersed, the force of the rolling ball pressing the inner surface of the guide bracket reduces, so that the indentations do not easily occur. As a result, the heat treatment of the inner surface of the guide bracket with which the rolling ball comes into contact is not necessary, achieving the simplification of the manufacturing process and the reduction in the manufacturing cost.

### Brief Description of Drawings

[FIG. 1] FIG. 1 is a perspective view illustrating the outer appearance of a reclining device according to one embodiment of the present invention.
[FIG. 2] FIG. 2 is an exploded perspective view of the reclining device according to the embodiment of the present invention seen from an internal gear side.
[FIG. 3] FIG. 3 is an exploded perspective view of the reclining device according to the embodiment of the present invention seen from a guide bracket side.
[FIGs. 4] FIG. 4(a) is a plan view of the reclining device according to the embodiment of the present invention seen from the internal gear side, FIG. 4(b) is its side view, and FIG. 4(c) is a sectional view taken along the D-D line in FIG. 4(b).
[FIGs. 5] FIG. 5(a) is a sectional view taken along the A-A line in FIG. 4(a), FIG. 5(b) is a sectional view taken along the B-B line in FIG. 4(a), FIG. 5(c) is a sectional view taken along the C-C line in FIG. 4(a) and is a view illustrating one of half ranges whose boundary is the axial center, and FIG. 5(d) is an enlarged view of the vicinity of a place where rolling balls are disposed in FIG. 5(a).
[FIGs. 6] FIGs. 6(a) to (c) are views illustrating another mode of the internal gear and an attachment ring, corresponding to FIGs. 5(a) to (c).
[FIG. 7] FIG. 7 is an exploded perspective view of a reclining device according to another embodiment of the present invention seen from a guide bracket side.
[FIG. 8] FIG. 8 is a plan view of the reclining device according to the other embodiment illustrated in FIG. 7 seen from an internal gear side.
[FIG. 9] FIG. 9 is a view illustrating part of another mode of the internal gear usable in the reclining device according to the other embodiment illustrated in FIG. 7 and illustrating one of half ranges whose boundary is the axial center, of the section along the C-C line in FIG. 8.
[FIG. 10] FIG. 10 is a plan view of a reclining device according to a mode in which ball members are disposed at predetermined positions, seen from an internal gear side.
[FIG. 11] FIG. 11 is an explanatory view of a method of a load test.
[FIG. 12] FIG. 12 illustrates load-deflection graphs which are the results of the load test of eight samples of the reclining device.

### Description of Embodiments

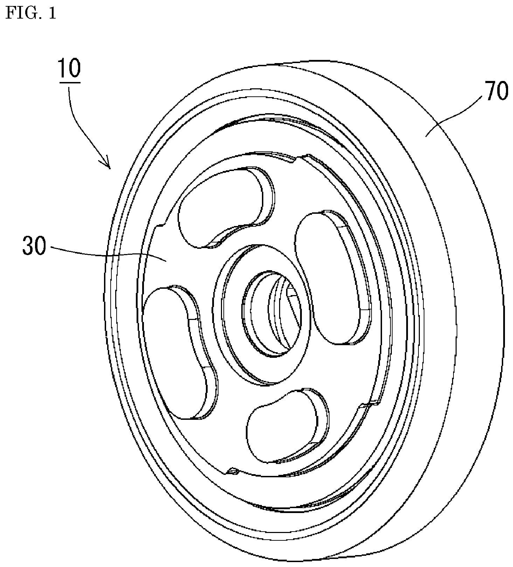

The present invention will be hereinafter described in more detail based on embodiments illustrated in the drawings. FIG. 1 to FIGs. 5 illustrate a reclining device 10 according to one embodiment of the present invention. The reclining device 10 is attached between a side frame of a seat cushion frame and a side frame of a seat back frame. As illustrated in FIG. 1 to FIGs. 5, the reclining device 10 includes a guide bracket 20 and an internal gear 30, and for example, the guide bracket 20 is fixed to the vicinity of a rear portion of the side frame of the seat cushion frame and the internal gear 30 is fixed to the vicinity of a lower portion of the side frame of the seat back frame.

The guide bracket 20 is disk-shaped, and a placement hole 22 with a predetermined diameter where to place a spiral spring 40 penetrates through its center. In at least one place of an inner circumferential surface of the placement hole 22, an engagement groove 22a is provided, and an outer end 41 of the spiral spring 40 is engaged with any one of the engagement grooves 22a.

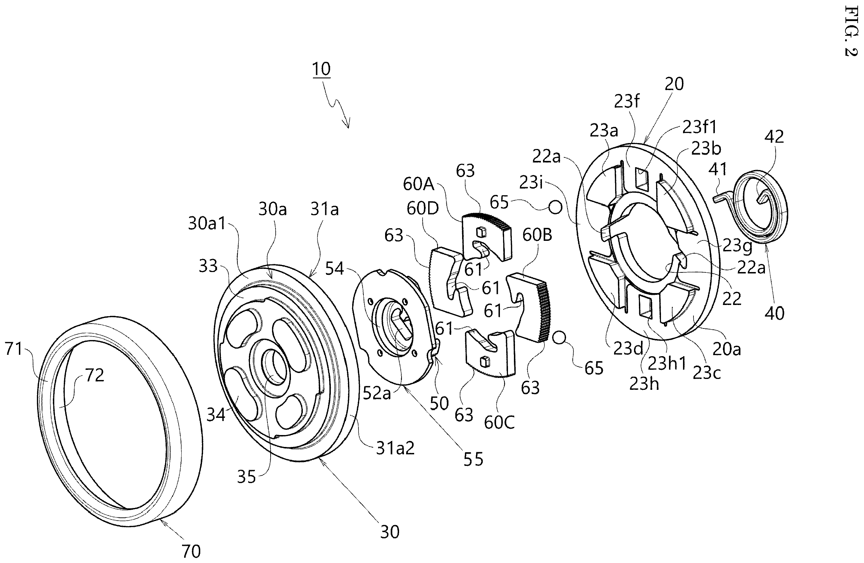

As illustrated in FIG. 2, the guide bracket 20 has four guide walls 23a to 23d arranged at equal intervals in the circumferential direction on its inner surface 20a (surface facing the internal gear 30) and projecting from the inner surface 20a, and in four guide grooves 23f to 23i between the adjacent guide walls 23a, 23b, between 23b and 23c, between 23c and 23d, and between 23d and 23a, later-described lock plates 60A to 60D are disposed and slide along the guide grooves 23f to 23i in the radial direction.

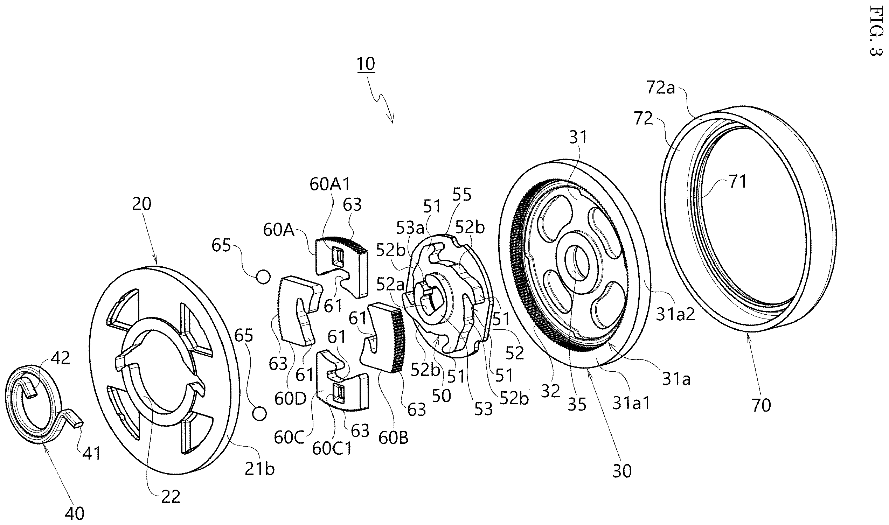

As illustrated in FIG. 3, the internal gear 30 has a circular shape in a plan view and a substantially concave shape in a sectional view, has internal teeth 32 formed on an inner circumferential surface of its concave portion 31, and is disposed with the concave portion 31 facing the inner surface 20a of the guide bracket 20. As illustrated in FIG. 2, on an axial-direction outer end portion 30a of the internal gear 30, a circular large-diameter projection 33 projecting axially outward from a position closer to the center than its circumferential rim 30a1 is provided, and a plurality of connecting projections 34 projecting further axially outward from an outer surface of the circular large-diameter projection 33 are arranged in the circumferential direction. The internal gear 30 is connected to the side frame of, for example, the seat back through the connecting projections 34.

The guide bracket 20 and the internal gear 30 are positioned by an attachment ring 70 with the inner surface 20a of the guide bracket 20 and the concave portion 31 of the internal gear 30 facing each other and with an end surface 31a1 of a circumferential wall 31a of the concave portion 31 abutting on the inner surface 20a of the guide bracket 20.

The attachment ring 70 is formed of a worked metal plate and has: a ring-shaped bottom plate 71 formed in a substantially circular ring shape with a predetermined width in a plan view; and a ring-shaped side plate 72 extending from an outer circumferential edge of the ring-shaped bottom plate 71 in a substantially orthogonal direction, that is, extending along an outer circumferential surface 31a2 of the circumferential wall 31a of the internal gear 30. In other words, the attachment ring 70 is formed such that a cross section of the combination of the ring-shaped bottom plate 71 and the ring-shaped side plate 72 along the radial direction is substantially L-shaped (see FIG. 2, FIG. 3, and FIGs. 5).

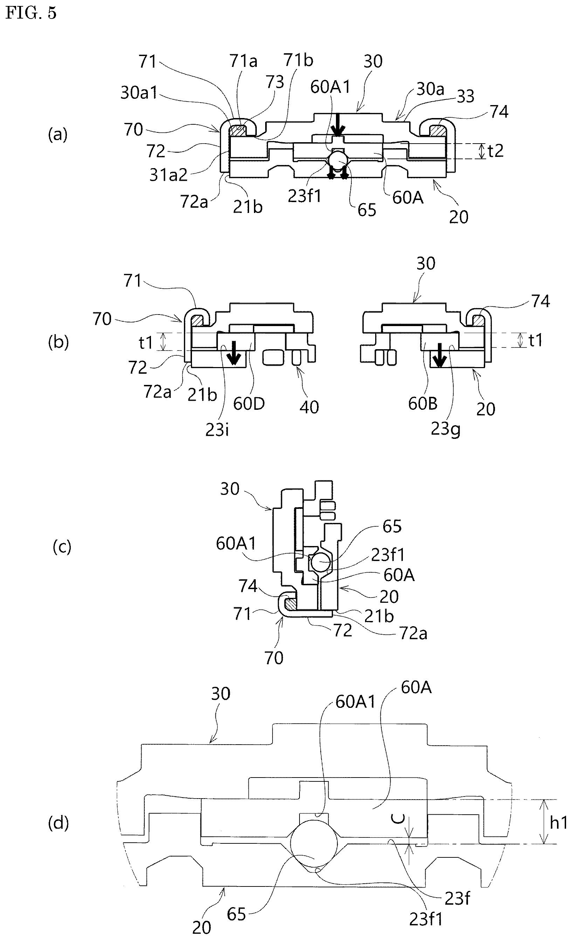

As illustrated in FIGs. 5(a) to (c), the ring-shaped bottom plate 71 is disposed to face the circumferential rim 30a1 of the axial-direction outer end portion 30a of the internal gear 30. The ring-shaped bottom plate 71 has such a shape that a gap 73 is formed between its inner surface 71a and the circumferential rim 30al of the axial-direction outer end portion 30a of the internal gear 30. In this embodiment, the ring-shaped bottom plate 71 has a substantially U-shaped section with its open side facing the axial-direction outer end portion 30a of the internal gear 30, and its inner circumferential edge 71b is close to the circumferential rim 30a1 of the axial-direction outer end portion 30a. It should be noted that the sectional shape of the ring-shaped bottom plate 71 is not limited to the substantially U-shape as long as it can form the gap 73 and its inner circumferential edge 71b is close to the axial-direction outer end portion 30a, and can be a substantially V-shape or any other modified shape. Further, its sectional shape need not be uniform along the entire circumference and it may partly have a different shape.

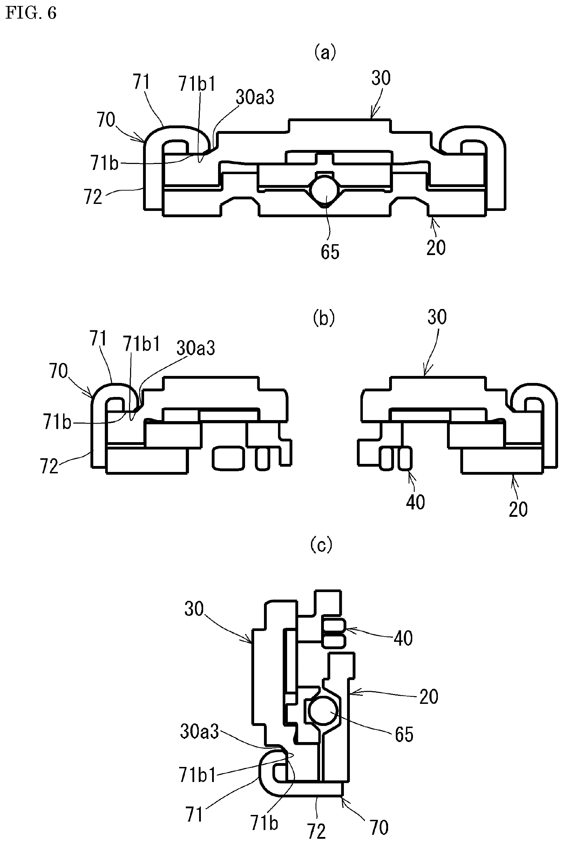

A sliding member is provided in the gap 73. In this embodiment, a lubricant 74 is filled as the sliding member in the gap 73. The ring-shaped bottom plate 71 is formed such that the inner circumferential edge 71b comes close to the axial-direction outer end portion 30a of the internal gear 30 as described above, but is preferably provided such that the inner circumferential edge 71b comes into contact with the axial-direction outer end portion 30a of the internal gear 30 to prevent the lubricant 74 filled in the gap 73 from leaking out. Preferably, the lubricant 74 is relatively low-penetration grease that can have a required viscous drag even if its amount is small and that does not easily leak from a gap. Specifically, grease whose penetration is in a range of 265 to 295 is preferable. Further, on the axial-direction outer end portion 30a of the internal gear 30, the circular large-diameter projection 33 is formed closer to the center than the circumferential rim 30a1, and a boundary surface 30a3 between the circumferential rim 30a1 and the circular large-diameter projection 33 is a surface having an about 45-degree inclination. Therefore, as illustrated in FIGs. 6(a) to (c), at least an outer edge portion 71b1 of the inner circumferential edge 71b of the ring-shaped bottom plate 71 is preferably a surface having the same angle of inclination so that the outer edge portion 71b1 is capable of coming into surface contact with the boundary surface 30a3 which is a portion corresponding to the outer edge portion 71b1. That is, an end surface of the inner circumferential edge 71b is preferably worked in advance into a shape (surface shape) that can come into surface contact with a contact portion in the axial-direction outer end portion 30a (the circumferential rim 30a1 and the boundary surface 30a3 in the example in FIGs. 6). This can more surely prevent the leakage of the lubricant 74 and at the same time can make the relative rotation of the attachment ring 70 and the internal gear 30 smoother.

Further, in any of the aforesaid cases, the metal plate forming the attachment ring 70 is preferably smaller in Vickers hardness than the internal gear 30 so that the relative rotation of the attachment ring 70 and the internal gear 30 can be smooth even if the inner circumferential edge 71b of the ring-shaped bottom plate 71 of the attachment ring 70 is in contact with the axial-direction outer end portion 30a of the internal gear 30, and a difference in the Vickers hardness therebetween is more preferably 100 HV or more. Making the attachment ring 70 and the internal gear 30 different in hardness enables to promote the smooth operation because the attachment ring 70 undergoes self-deformation to have an optimum state for each product and easily fits as the operation is repeated. However, to avoid an excessive increase of the deformation of the attachment ring 70, their Vickers hardness difference is preferably about 500 HV at the maximum. The Vickers hardness of the metal plate forming the attachment ring 70 is preferably within a range of 150 to 250 HV.

As a result of filling the lubricant 74 such as the grease in the gap 73, the viscous drag acts owing to shear properties of the lubricant 74 when the attachment ring 70 and the internal gear 30 rotate relative to each other. To make damping force due to the viscous drag act more efficiently, the gap 73 is preferably formed as radially outward as possible on the axial-direction outer end portion 30a of the internal gear 30. In consideration of this point, in this embodiment, the gap 73 is provided to face the circumferential rim 30a1 which is located at a radially outermost position of the axial-direction outer end portion 30a as in the above. However, this embodiment also includes a mode in which the gap 73 is located closer to the center than the circumferential rim 30a1 in consideration of the width of the gap 73 along the radial direction (width along the radial direction of the ring-shaped bottom plate 71), the penetration of the grease used as the lubricant 74, and so on. Further, depending on the width along the radial direction, thickness, material, and so on of the ring-shaped bottom plate 71, it is also possible to form a plurality of rows of the gaps 73 and fill the lubricant 74 in each of the rows.

In the state in which the inner surface 20a of the guide bracket 20 faces the concave portion 31 of the internal gear 30 and a lock mechanism including the spiral spring 40, the cam 50, and the lock plates 60A to 60D is housed in an inner space therebetween, the attachment ring 70 is mounted from, in this embodiment, the axial-direction outer end portion 30a side of the internal gear 30 such that an edge 72a of the ring-shaped side plate 72 goes beyond the outer circumferential surface 31a2 of the circumferential wall 31a of the internal gear 30 to reach the outer circumferential surface 21b of the guide bracket 20 located beyond the outer circumferential surface 31a2 (see FIGs. 5(a) to (c)). At this time, as a result of such assembling, the circular large-diameter projection 33 is exposed more outward than the inner circumferential circle of the ring-shaped bottom plate 71 because the ring-shaped bottom plate 71 has an inside diameter substantially equal to the outside diameter of the circular large-diameter projection 33 of the internal gear 30 and thus is large enough for the circular large-diameter projection 33 to be inserted therethrough. After the attachment ring 70 is mounted in this manner, a portion, of its ring-shaped side plate 72, facing the outer circumferential surface 21b of the guide bracket 20 is fixed to the outer circumferential surface 21b by welding. Therefore, when the seat back rotates relative to the seat cushion in the state in which, for example, the guide bracket 20 is fixed to the side frame of the seat cushion and the connecting projections 34 of the internal gear 30 are fixed to the side frame of the seat back, the guide bracket 20 and the internal gear 30 rotate relative to each other. The attachment ring 70 rotates relative to the internal gear 30 with the guide bracket 20, the radial-direction movement of the internal gear 30 is restricted by the ring-shaped side plate 72 of the attachment ring 70, and the axial-direction movement of the internal gear 30 is restricted by the ring-shaped bottom plate 71.

The lock mechanism unit is provided with the cam 50 for moving the lock plates 60A to 60D (see FIG. 2 and FIG. 3). On the cam 50, four engagement projections 51, 51 in a substantially arc shape and extending in a horn shape are arranged at equal intervals in the circumferential direction so as to correspond to the four lock plates 60A to 60D. Further, on a main body portion 52 of the cam 50 excluding the engagement projections 51, 51, stepped portions 52b, 52b bulging to have a larger outside diameter are formed at four positions a predetermined-angle apart from base portions of the engagement projections 51, 51. The cam 50 is fixed integrally to one surface of a spacer plate 55, and at its center, a flat center hole 52a where to insert a shaft portion of an operation member (not illustrated) for reclining operation is penetratingly formed. When the operation member is operated to rotate in a forward or reverse direction, the cam 50 follows this rotation to rotate in the same direction.

The cam 50 has a first shaft portion 53 provided on its surface facing the guide bracket 20 to project toward the guide bracket 20 from the periphery of the flat center hole 52a (see FIG. 3). The first shaft portion 53 has an outside diameter smaller than the inside diameter of the spiral spring 40 and has an engagement groove 53a cut out from its outer circumferential surface toward the center. The spiral spring 40 is disposed on the outer periphery of the first shaft portion 53 with its inner end 42 engaged with the engagement groove 53a of the first shaft portion 53 and is disposed in the placement hole 22 of the guide bracket 20 together with the first shaft portion 53. The spiral spring 40 biases the cam 50 in one rotation direction because its outer end 41 is engaged with the engagement groove 22a formed in the inner circumferential surface of the placement hole 22 of the guide bracket 20.

At the center of the internal gear 30, a second shaft portion 35 projecting toward the cam 50 is provided, and the second shaft portion 35 is inserted to a shaft bearing hole 54 formed in the cam 50, so that the cam 50 is rotatably supported (see FIG. 2 and FIG. 3).

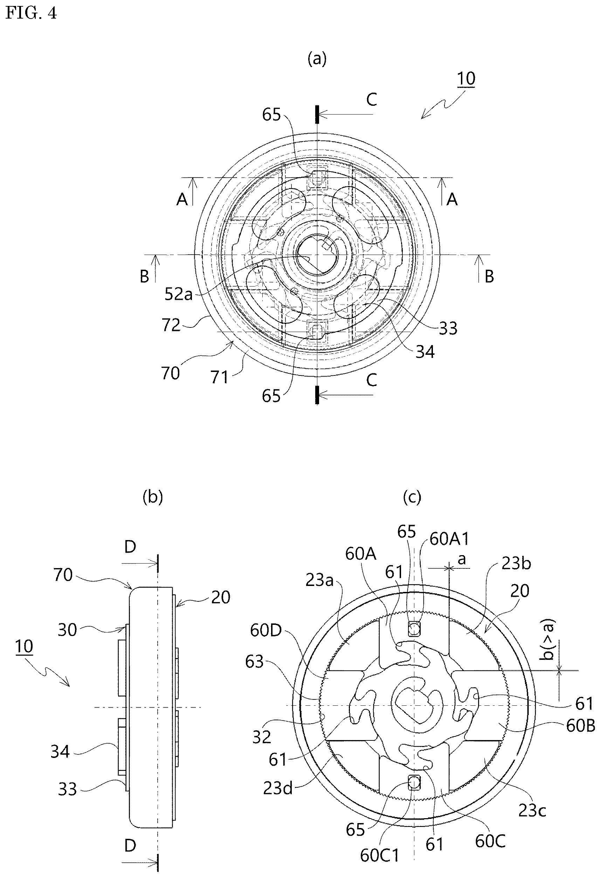

As illustrated in FIG. 2 to FIGs. 4, the four lock plates 60A to 60D are used in this embodiment. The four lock plates 60A to 60D correspond to the four horn-shaped engagement projections 51, 51 formed on the cam 50 and have such a width as to fit respectively between the adjacent guide walls 23a, 23b, between 23b and 23c, between 23c and 23d, and between 23d and 23a with as small operation clearances (operation clearances in the circumferential direction (that is, the rotation direction)) a, b as possible (see FIG. 4(c)). By being guided by adjacent side surfaces of the guide walls 23a to 23d, the lock plates 60A to 60D are slidable on the guide grooves 23f to 23i along the radial direction of the guide bracket 20.

The rotation of the cam 50 in one direction (clockwise in FIG. 4(c)) due to the elasticity of the spiral spring 40 biases the lock plates 60A to 60D radially outward, and the rotation of the cam 50 in the opposite direction (anticlockwise in FIGs. 4) by the operation member displace the lock plates 60A to 60D in the center direction. The lock plates 60A to 60D have a substantially rectangular shape in a plan view and in the lock plates 60A to 60D, engagement-destination grooves 61, 61 cut out in a substantially arc shape anticlockwise in FIG. 4(c) from their inner circumferential surfaces are provided. When the cam 50 rotates anticlockwise in FIG. 4(c), the engagement projections 51, 51 are engaged with the engagement-destination grooves 61, 61 to pull the lock plates 60A to 60D in the center direction. When the cam 50 is biased by the spiral spring 40 to rotate clockwise in FIG. 4(c), the engagement projections 51, 51 and the stepped portions 52b, 52b press the lock plates 60A to 60D radially outward. External teeth 63, 63 are formed on the outer circumferential surfaces of the lock plates 60A to 60D, and when the lock plates 60A to 60D are pressed radially outward, the external teeth 63, 63 are engaged with the internal teeth 32 of the internal gear 30, so that the guide bracket 20 and the internal gear 30 are locked to be nonrotatable relative to each other (the state in FIG. 4(c)).

In this embodiment, out of the four lock plates 60A to 60D, the lock plate 60A disposed between the guide walls 23a, 23b and the lock plate 60C disposed between the guide walls 23c and 23d, which lock plates are 180-degree apart from each other to face across the rotation center of the guide bracket 20 and the internal gear 30, both have support grooves (plate-side support grooves) 60A1, 60C1 formed in their surfaces facing the guide grooves 23f, 23h of the guide bracket 20 (see FIG. 2, FIG. 3, and FIG. 4(c)). In the guide grooves 23f, 23h of the guide bracket 20, support grooves (bracket-side support grooves) 23f1, 23h1 are formed at positions facing the plate-side support grooves 60A1, 60C1 (see FIG. 2 and FIGs. 5). This embodiment uses two kinds of lock plates, namely, the lock plates 60A, 60C in which the plate-side support grooves 60A1, 60C1 are formed and the lock plates 60B, 60D in which the plate-side support grooves are not formed. Hereinafter, the lock plates 60A, 60C in which the plate-side support grooves 60A1, 60C1 are formed will be referred to as "first lock plates", and the other lock plates 60B, 60D in which the plate-side support grooves are not formed will be referred to as "second lock plates".

Rolling balls 65 made of metal balls such as steel balls are provided while sandwiched by the plate-side support grooves 60A1, 60C1 of the first lock plates 60A, 60C and the bracket-side support grooves 23f1, 23h1. Further, the length in the radial direction (the radial direction of the guide bracket 20) of either of the support grooves, in this embodiment, the bracket-side support grooves 23f1, 23h1 is larger than the diameter of the rolling balls 65 (see FIG. 2 and FIG. 5(c)) so that the rolling balls 65 can be relatively displaced in the bracket-side support grooves 23f1, 23h1 in the radial direction. Further, as illustrated in FIGs. 5(a), (d), the bracket-side support grooves 23f1, 23h1 are preferably formed such that their cross sections along the groove width direction which is a direction orthogonal to the radial direction are substantially V-shaped. In this embodiment, a groove width of the bracket-side support grooves 23f1, 23h1 in terms of the length along the surface of the guide groove 23f is slightly larger than the diameter of the rolling balls 65, but the bracket-side support grooves 23f1, 23h1 become gradually narrower in width as they go in the depth direction (the thickness direction of the guide bracket 20) and, in their parts under the middle, become narrower in width than the diameter of the rolling balls 65 and thus have a substantially V-shaped section so that only the lower halves of the rolling balls 65 are housed therein. Consequently, the rolling balls 65 are each supported at two points on both sides by the inclined surfaces of the bracket-side support grooves 23f1, 23h1 each having a substantially V-shaped section, in a view of the sections along the circumferential direction of the guide bracket 20, and partly project outward from the bracket-side support grooves 23f1, 23h1 (see FIG. 5(d)). Therefore, the rolling balls 65 are each sandwiched between the two points in the circumferential direction, to be restricted from rolling in the circumferential direction though allowed to roll in the radial direction along the bracket-side support grooves 23f1, 23h1.

The plate-side support grooves 60A1, 60C1 formed in the two first lock plates 60A, 60C are disposed to cover the rolling balls 65, 65 projecting from the bracket-side support grooves 23f1, 23h1. However, the plate-side support grooves 60A1, 60C1 are formed to have such a groove width that the portions, of the rolling balls 65, projecting from the bracket-side support grooves 23f1, 23h1 are not entirely housed in the plate-side support grooves 60A1, 60C1 to prevent facing surfaces of the first lock plates 60A, 60C and the guide grooves 23f, 23h from coming into contact with each other. Consequently, small gaps (gaps denoted by the reference sign c in FIG. 5(d)) are formed between the facing surfaces of the first lock plates 60A, 60C and the guide grooves 23f, 23h, facilitating the rolling of the rolling balls 65.

The second lock plates 60B, 60D which face each other across the rotation center of the guide bracket 20 and the internal gear 30 with a 180-degree interval and where the aforesaid rolling balls 65 are not disposed each have a thickness t1 (see FIG. 5(b)) larger than a thickness t2 (see FIG. 5(a)) of the first lock plates 60A, 60C. Preferably, the thickness t1 of the second lock plates 60B, 60D is equal to or slightly larger than a distance h1 along the axial direction from the surfaces of the guide grooves 23f, 23h being the inner surface 20a of the guide bracket 20 up to the outer surfaces of the first lock plates 60A, 60C (surfaces facing the concave portion 31 of the internal gear 30) through the rolling balls 65, 65 (that is, equal to or slightly larger than the distance corresponding to the sum of the gap denoted by the reference sign c in FIG. 5(d) and the thickness of the first lock plates 60A, 60C) (see FIG. 5(d)). Since the second lock plates 60B, 60D having such a thickness t1 are provided, a load applied to the guide bracket 20 and the internal gear 30 in the axial direction (the thickness direction (the downward arrow direction in FIGs. 5(a), (b))) is received mainly by the two second lock plates 60B, 60D out of the four lock plates 60A to 60C.

If the second lock plates 60B, 60D should be thinner than the thickness satisfying the condition of the thickness t1, the following concern would arise. Firstly, the guide bracket 20 and the internal gear 30 may undergo slight precession about the rolling balls 65, 65 provided between the first lock plates 60A, 60C and the guide bracket 20. In this embodiment, on the other hand, since the second lock plates 60B, 60D having the aforesaid thickness t1 are disposed to face each other with the 180-degree interval, such precession can be prevented. Further, if the second lock plates 60B, 60D are thinner than the aforesaid thickness t1, the load concentrates on the first lock plates 60A, 60C where the rolling balls 65, 65 are disposed, and the rolling balls 65, 65 may form indentations in the guide grooves 23f, 23h being the inner surface 20a of the guide bracket 20. On the other hand, by making the thickness t1 of the second lock plates 60B, 60D satisfy the aforesaid condition, it is possible to prevent such indentations formed by the rolling balls 65, 65. Further, a possible measure against the indentations may be to heat-treat the guide bracket 20, but this requires a heat-treatment process to increase the manufacturing cost. From the above, it follows that the thickness t1 of the second lock plates 60B, 60D is preferably equal to or slightly larger than the aforesaid distance h1. However, if they are too thick, the wobbling of the first lock plates 60A, 60C increases, and therefore, even if the thickness t1 is larger than the aforesaid distance h1, a difference of the thickness t1 from the distance h1 is more preferably 0.12 mm at the maximum.

Further, the rolling balls 65, 65 are disposed between the plate-side support grooves 60A1, 60C1 of the first lock plates 60A, 60C and the bracket-side support grooves 23f1, 23h1 of the guide grooves 23f, 23h of the guide bracket 20. Accordingly, the first lock plates 60A, 60C are appropriately positioned in the circumferential direction by the rolling balls 65, 65.

Further, in the case where the guide bracket 20 is connected to the seat cushion frame and the internal gear 30 is connected to the seat back frame, the guide bracket 20 connected to the seat cushion frame is a fixed side, and in this case, the first lock plates 60A, 60C having the rolling balls 65, 65 are preferably attached so as to face each other in a substantially up-down direction. The gaps (reference sign b in FIG. 4(c)) between the second lock plate 60B and the guide walls 23b, 23c adjacent on its upper and lower sides and the gaps (same as those denoted by the reference sign b in FIG. 4(c)) between the other second lock plates 60D and the guide walls 23a, 23d adjacent on its upper and lower sides are preferably larger than the gaps (reference sign a in FIG. 4(c)) between the first lock plate 60A and the guide walls 23a, 23b adjacent on its left and right and the gaps (same as those denoted by reference sign a in FIG. 4(c)) between the other first lock plate 60C and the guide walls 23c, 23d adjacent on its left and right. Consequently, it is possible to absorb an up-down-direction dimension error of the seat back frame and the seat cushion frame while positioning the lock plates 60A, 60C in the circumferential direction.

As described above, the reclining device 10 of this embodiment is disposed on the vehicle seat, with, for example, the guide bracket 20 being connected to the seat cushion frame and the internal gear 30 being connected to the seat back frame. The internal gear 30 rotates on the inner side of the ring-shaped bottom plate 71 and the ring-shaped side plate 72 of the attachment ring 70 as described above, but in some case, a more than necessary clearance is formed therebetween due to dimension accuracy variation among the members, causing axis misalignment or abnormal sound when vibration or the like during traveling acts. According to this embodiment, on the other hand, the operation of the viscous drag of the lubricant 74 reduces such axis misalignment and can also reduce the generation of the abnormal sound. Therefore, this embodiment contributes to the absorption of the dimension accuracy variation among the members. Further, when the internal gear 30 rotates relative to the attachment ring 70 at the time of the reclining operation, the viscous drag of the lubricant 74 can damp the rotational force, achieving a smooth and luxurious movement.

Regarding the reclining device 10 of this embodiment in which the grease having a 282 penetration was filled as the lubricant 74 in the gap 73 and a reclining device of a comparative example having completely the same structure except that the lubricant 74 was not filled, a damping coefficient was found when force to rotate the guide bracket 20 and the internal gear 30 in one direction at a predetermined speed was applied to rotate them relative to each other by 1/4 circumference. The damping coefficient was 1335 Ns/m in the reclining device 10 of this embodiment, while the damping coefficient was 205 Ns/m in the reclining device of the comparative example. Therefore, the reclining device 10 of this embodiment 10 has a high damping force at the time of the relative rotation despite its simple structure.

Further, since the second lock plates 60B, 60D receive compressive force in the axial direction (thickness direction) accompanying a load in the BL direction of the seat, the first lock plates 60A, 60C are prevented from inclining about the rolling balls 65, 65 and undergoing the precession. Further, since the second lock plates 60B, 60D receive the compressive force, the first lock plates 60A, 60C are not strongly pressed in the axial direction, and the resistance against the radial-direction movement of the first lock plates 60A, 60C does not become large. This makes the radial-direction movement of the first lock plates 60A, 60C smooth and also inhibits a locking failure.

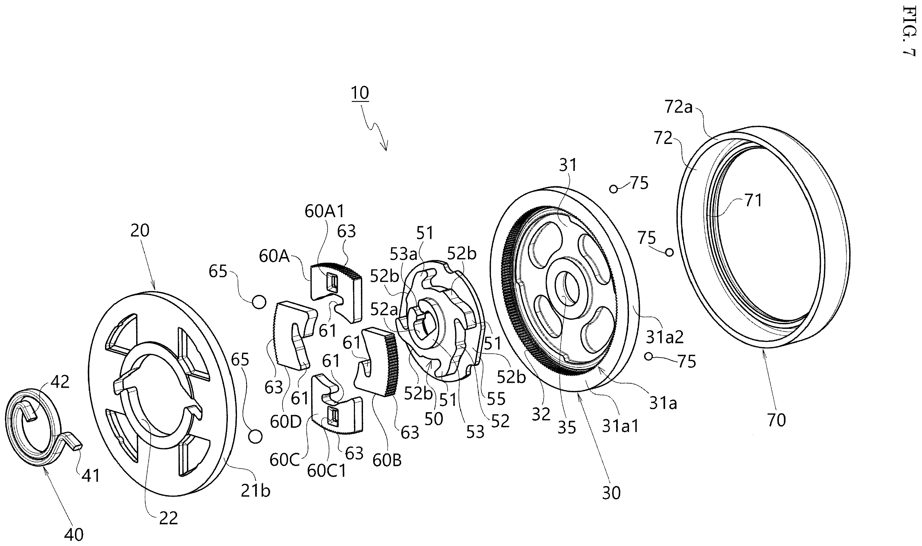

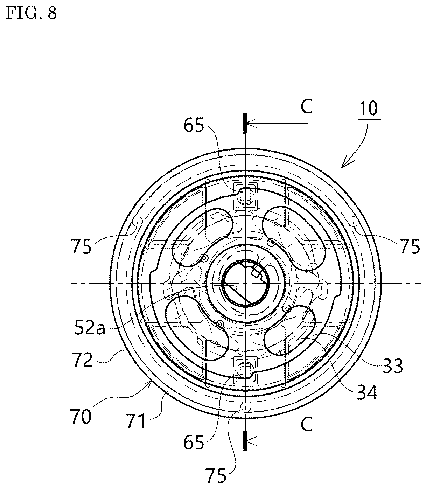

FIG. 7 and FIG. 8 are explanatory views of a reclining device 10 according to another embodiment. In this embodiment, three ball member 75 made of metal balls such as steel balls are disposed in a gap 73 of an attachment ring 70. That is, this is a structure in which the ball members 75 are disposed together with a lubricant 74 in the gap 73. Therefore, when the attachment ring 70 and an internal gear 30 relatively rotate, it is possible to smooth the movement and at the same time, increase damping force owing to the operation of the frictional force of the ball members 75. Further, depending on the size of the ball members 75, the flow rate of the lubricant 74 moving around the ball members 75 increases/decreases, thereby enabling the adjustment of the damping force.

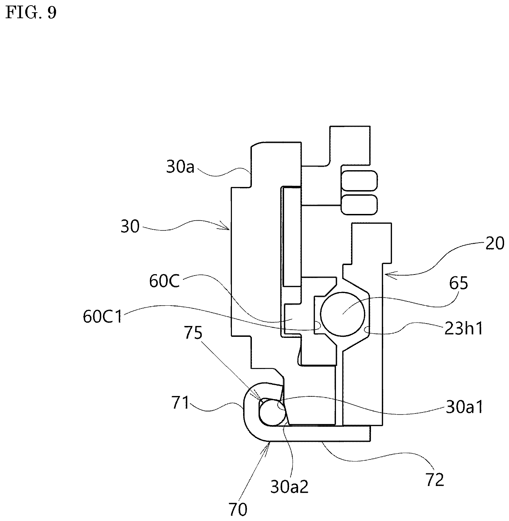

In this embodiment, the three ball members 75 are disposed but the number of the ball members 75 disposed is not limited to this. Further, the ball members 75 are not fixed at predetermined positions in the gap 73. In the case where the ball members 75 are not fixed, they move at the time of the relative rotation of the attachment ring 70 and the internal gear 30, so that the aligning function of moving the internal gear 30 relative to the attachment ring 70 and a guide bracket 20 in the axial center direction easily acts. In this case, for example, as illustrated in FIG. 9, the internal gear 30 can be structured such that, on a circumferential rim 30a1 of its axial-direction outer end portion 30a, an inclined surface 30a2 which is inclined with its portion close to the center projecting axially outward is formed. In a case where the plurality of ball members 75 are arranged in the circumferential direction in the gap 73 formed by the axial-direction outer end portion 30a of the internal gear 30 and the attachment ring 70, these ball members 75 come into contact with the inclined surface 30a2 to easily bias the internal gear 30 in the axial center direction, facilitating the alignment of the internal gear 30 with the attachment ring 70 and the guide bracket 20.

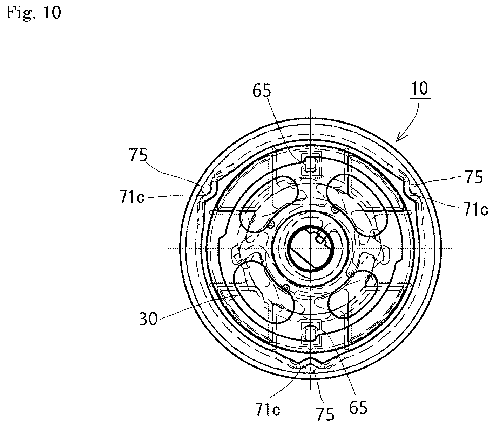

FIG. 10 illustrates another adoptable structure example in which concave portions 71c arranged at 120-degree intervals in the circumferential direction and projecting inward are provided on an inner circumferential side of the ring-shaped bottom plate 71, and the ball members 75 rotate in contact with the lubricant 74 at the positions of the concave portions 71c without being moved in the circumferential direction. This can also smooth the relative rotation of the attachment ring 70 and the internal gear 30 and improve the damping force as in the above. This may be slightly inferior in function as compared with the case where the ball members 75 are not fixed, but achieves the aforesaid aligning function, and in addition, by providing the inclined surface 30a2 illustrated in FIG. 9, it is possible to more improve the aligning function as in the above.

In any of the cases, the ball members 75 have the functions of smoothing the relative rotation of the attachment ring 70 and the internal gear 30 and improving the damping force as described above, but if desired viscous drag and damping force can be obtained only with the lubricant 74, a structure without the ball members 75 is also possible.

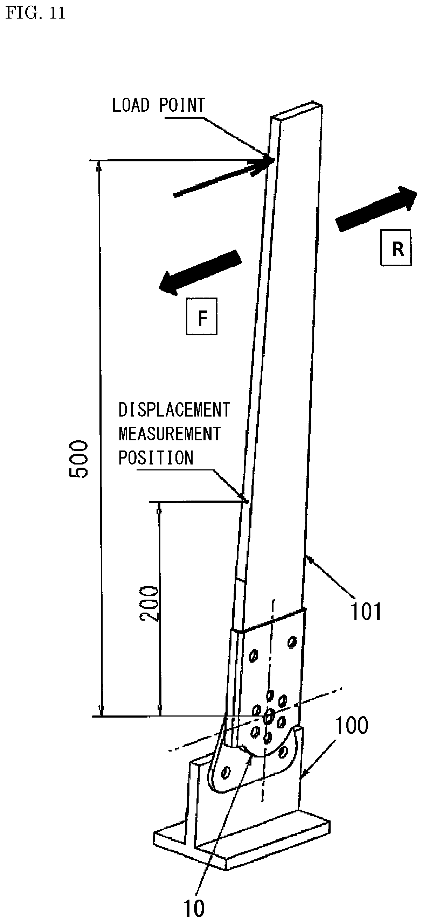

As illustrated in FIG. 11, a base jig 100 was connected to the guide bracket 20 of the reclining device 10, a long plate-shaped jig 101 was connected to the internal gear 30 to extend upward, a load was input forward and rearward to the long plate-shaped jig 101 at its position 500 mm above the rotation center of the reclining device 10, and a displacement of a portion 200 mm distant from the rotation center was measured. The reclining device 10 used here was that of the embodiment in FIG. 1 to FIGs. 6 not having the ball members 75 on the inner side of the attachment ring 70. The thickness of the attachment ring 70 was 1.4 mm, and as illustrated in FIGs. 6(a) to (c), at least the end surface of the outer edge portion 71b1 of the inner circumferential edge 71b of the ring-shaped bottom plate 71 was worked into a 45-degree inclined surface, and the attachment ring 70 is assembled with this inclined surface in surface contact with the aforesaid boundary surface 30a3 which is the 45-degree inclined surface of the internal gear 30.

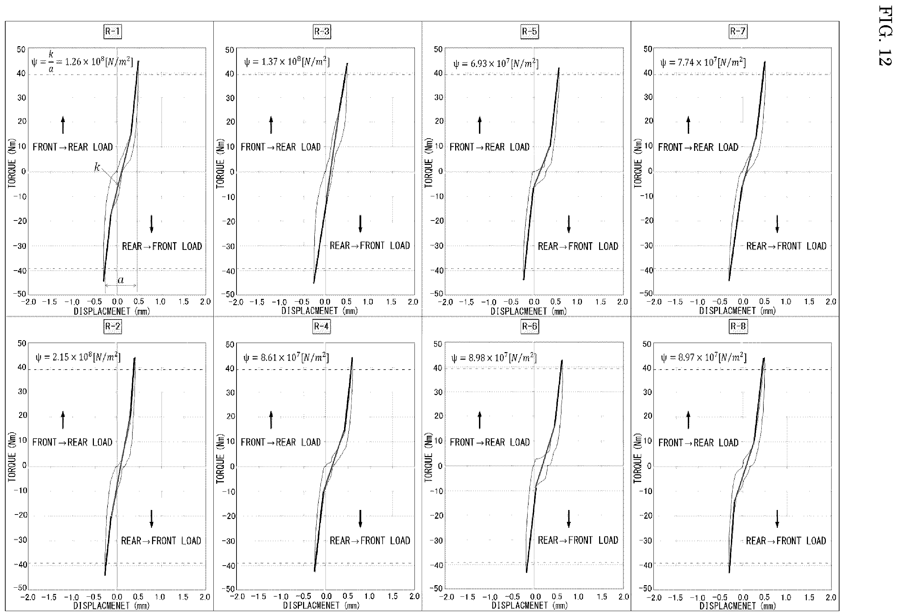

FIG. 12 illustrates graphs of the test results of eight reclining devices 10 (R-1 to R-8). As is obvious from these graphs, in all the reclining devices 10, a load value varies substantially linearly with respect to a displacement amount and there is no point where the load value greatly changes. This indicates that the circumferential-direction wobbling of the lock plates 60A to 60D is very small. Further, the total displacement amount is also small, from which it is seen that, owing to the thickness of the second lock plates 60B, 60D, and so on, the axial-direction frictional force is high and the wobbling and deflection are small.

The reclining device 10 of the present invention is not limited to the above-described embodiments.

In the above-described embodiments, the lubricant 74 is filled as the sliding member in the gap 73 of the attachment ring 70, but a highly slidable molded member can be filled instead of the lubricant 74, for instance. Further, it is also possible to fill the lubricant 74 in addition to disposing the highly slidable molded member. As the highly slidable molded member, one that is molded from a thermoplastic resin to which a potassium titanate fiber is added (manufactured by Otsuka Chemical Co., Ltd. brand name "POTICON") is preferably used. As the highly slidable molded member, one that is molded in a rod shape or a ring shape in advance can be disposed in the gap 73, or it is also possible to dispose the highly slidable molded member in the gap 73 by filling and curing its material resin in the gap 73.

The use of such a highly slidable molded member made of a synthetic resin can also bring about the same operations and effects brought about by the use of the lubricant 74, such as the smoothing of the rotation of the internal gear or the guide bracket relative to the attachment ring 70 and the reduction in the generation of the abnormal sound, and the use of the highly slidable molded member further has the following operations and effects. That is, in the case where the highly slidable molded member is one molded in advance, it serves as a thickness-direction compression reference of the attachment ring 70 at the time of the assembly, facilitating the assembling. Further, even if the internal gear is inclined when attached, an effect of lowing sliding resistance in the rotation direction can be surely exhibited. Further, in the mode in which the aforesaid ball members 75 are put in the gap 73, because of variations in the accuracy of the dimension and assembly of the seat back frame and the seat cushion frame to which the reclining device 10 is to be attached, the ball members 75 may partly come into contact with the attachment ring 70 to induce the plastic deformation of the attachment ring 70. However, in the case of the highly slidable molded member made of the thermoplastic resin, even if the seat back frame and the seat cushion frame have the aforesaid variations, the smooth rotation is easily ensured because such a highly slidable molded member is lower in Young's modulus than the attachment ring 70 made of metal and thus wears down to easily fit as it is used.

For example, in the above description, the attachment ring 70 is inserted from the internal gear 30 side to be fixed to the guide bracket 20, and the attachment ring 70 and the guide bracket 20 rotate as a unit, but another possible structure is that the attachment ring 70 is inserted from the axial-direction outer end portion side of the guide bracket 20, the ring-shaped side plate 72 is fixed to the outer circumferential surface 31a2 of the internal gear 30, and the attachment ring 70 and the internal gear 30 rotate as a unit.

### Explanation of Reference Signs

- 10: reclining device
- 20: guide bracket
- 23a to: 20d guide wall
- 23f to 23i: guide groove
- 23f1, 23h1: bracket-side support groove
- 30: internal gear
- 32: internal tooth
- 40: spiral spring
- 50: cam
- 60A to 60D: lock plate
- 60A1, 60C1: plate-side support groove
- 63: external tooth
- 65: rolling ball
- 70: attachment ring
- 71: ring-shaped bottom plate
- 72: ring-shaped side plate
- 75: ball member

## Claims

1. A reclining device comprising:
a guide bracket connected to one of a seat cushion and a seat back;
an internal gear which is connected to the other of the seat cushion and the seat back and which rotates relative to the guide bracket;
a lock mechanism unit including a lock plate which is movable in a radial direction along a plurality of guide walls provided on an inner surface of the guide bracket and which has external teeth engageable with internal teeth of the internal gear; and
an attachment ring which has a ring-shaped bottom plate and a ring-shaped side plate extending from the ring-shaped bottom plate in a substantially orthogonal direction and has a substantially L-shape section, the ring-shaped bottom plate having an inner surface facing an axial-direction outer end portion of one of the internal gear and the guide bracket, and the ring-shaped side plate being fixed to an outer circumferential surface of the other of the internal gear and the guide bracket,
wherein the ring-shaped bottom plate of the attachment ring has such a shape that an inner circumferential edge thereof comes close to the axial-direction outer end portion of the facing internal gear or guide bracket, and
wherein a sliding member is provided in a gap formed by the attachment ring and the axial-direction outer end portion.

2. The reclining device according to claim 1, wherein the sliding member is a lubricant.

3. The reclining device according to claim 1, wherein the sliding member is a highly slidable molded member.

4. The reclining device according to any one of claims 1 to 3, wherein the inner circumferential edge of the ring-shaped bottom plate of the attachment ring is in contact with the axial-direction outer end portion of the internal gear.

5. The reclining device according to claim 4, wherein the inner circumferential edge of the ring-shaped bottom plate of the attachment ring is worked into a shape that is capable of coming into surface contact with a corresponding portion of the axial-direction outer end portion of the internal gear.

6. The reclining device according to claim 2, wherein a ball member is disposed in the gap together with the lubricant.

7. The reclining device according to claim 6, wherein the ball member is disposed in the gap without being fixed.

8. The reclining device according to claim 6, wherein the ball member is disposed rotatably at a predetermined position of the gap.

9. The reclining device according to any one of claims 6 to 8, wherein a circumferential rim of the axial-direction outer end portion of the internal gear or the guide bracket forming the gap with the ring-shaped bottom plate of the attachment ring has an inclined surface, the ball member comes into contact with the inclined surface to bias the inclined surface in the axial center direction to be capable of aligning the internal gear or the guide bracket.

10. The reclining device according to any one of claims 1 to 9, wherein the attachment ring is smaller in Vickers hardness than the internal gear.

11. The reclining device according to claim 9, wherein a difference in the Vickers hardness between the attachment ring and the internal gear is 100 HV or more.

12. The reclining device according to claim 2, wherein the lubricant is grease.

13. The reclining device according to claim 3, wherein the highly slidable molded member is molded from a thermoplastic resin to which a potassium titanate fiber is added.

14. The reclining device according to any one of claims 1 to 13,
wherein, as the lock plate included in the lock mechanism unit, the following two kinds are used:
a first lock plate between which and the inner surface of the guide bracket a rolling ball is interposed; and
a second lock plate larger in thickness than the first lock plate and provided between the guide walls which are adjacent in a circumferential direction and between which the first lock plate is not disposed.

15. A seat including a seat cushion and a seat back, the seat comprising the reclining device according to any one of claims 1 to 14.
